# EUROPÄISCHE PATENTANMELDUNG

(11) **EP 1 057 755 A2**
(43) Veröffentlichungstag der Anmeldung: **06.12.2000**
(21) Anmeldenummer: 00109943.1
(22) Anmeldetag: 11.05.2000
(51) Int. Cl.: B65G 17/34

(54) **Vorrichtung zum Sortieren von Stückgütern**

(30) Priorität: 02.06.1999 DE 19925294; 17.03.2000 DE 10013332
(71) Anmelder: Axmann Fördertechnik GmbH, 74889 Sinsheim-Steinsfurt (DE)
(72) Erfinder: Axmann, Norbert, Dipl.-Ing, 74889 Sinsheim (DE)
(74) Vertreter: Truckenmüller, Frank

(57) **Zusammenfassung**

Bei der Vorrichtung sind längs einer Sortierstrecke aufeinanderfolgend Sortiereinrichtungen (20) geführt und mittel einer Fördereinrichtung (15) angetrieben. Jede Sortiereinrichtung (20) besitzt einen Laufwagen (21) mit in den Führungsschienen der Sortierstrecke geführten Laufrollen (22) und ist mit Mitteln für die Aufnahme jeweils eines in einer Aufgabestation aufgebbaren Stückgutes und für dessen gezielten Abwurf in einer Abwurfstation ausgerüstet. Die Fördereinrichtung (15) umfaßt eine Gliederkette (16) aus gelenkig miteinander verbundenen Kettengliedern, die unterseitig eben ausgebildet sind. Mit den Laufwagen (21) der Sortiereinrichtungen ist jeweils ein über letztere in Förderrichtung vorstehendes Kettenglied (17) unterseitig fest verbunden und die Stoßstellen zwischen aufeinanderfolgenden Kettengliedern (17) sind jeweils von einer vorgespannten Blattfeder (34) unterseitig überbrückt. Als Antriebsmittel dient ein Reibradantrieb (18) mit einem unterseitig an den Kettengliedern (17) angreifenden Reibrad (19). Gemäß einem alternativen Lösungsgedanken ist mit den Laufwagen der Sortiereinrichtungen jeweils ein Kettenglied fest verbunden, wobei die Fördereinrichtung einen Reibflächenantrieb mit wenigstens drei, jeweils einen Andrückumfang aufweisende und um Drehachsen drehbare Drehelemente umfaßt. Die Drehachsen sind mit einem starren Träger in Sortierstreckenrichtung beabstandet derart verbunden, daß stets der Andrückumfang von wenigstens zwei der Drehelemente mit der Andrückfläche zumindest eines Kettengliedes kraftschlüssig zusammenwirkt.

## Beschreibung

Die Erfindung bezieht sich auf eine Vorrichtung zum Sortieren von Stückgütern, bei der längs einer Sortierstrecke aufeinanderfolgend Sortiereinrichtungen geführt und mittels einer Fördereinrichtung angetrieben sind, und bei der jede Sortiereinrichtung einen Laufwagen mit in Führungsschienen der Sortierstrecke geführten Laufrollen sowie Mittel für die Aufnahme jeweils eines in einer Aufgabestation aufgebbaren Stückgutes und für dessen gezielten Abwurf in einer Abwurfstation besitzt.

Vorrichtungen zum Sortieren von Stückgütern mit einer längs einer Sortierstrecke geführten Fördereinrichtung und dieser in Förderrichtung aufeinanderfolgend zugeordneten Sortiereinrichtungen sind allgemein bekannt. Als Fördereinrichtungen dienen bei derartigen Vorrichtungen Umschlingungstriebe mit über Umlenkräder geführten kurvengängigen Ketten, mit denen die Sortiereinrichtungen verbunden sind, aber auch Linearantriebe. Zum Abwerfen von Stückgütern sind die Sortiereinrichtungen entweder mit Kippschalen oder mit quer zur Sortierstrecke antreibbaren Gurtbändern ausgerüstet.

Die beiden vorbekannten Antriebssysteme sind aufwendig und dementsprechend teuer. Durch die Erfindung soll daher eine Vorrichtung der eingangs genannten Art und Zweckbestimmung mit einem im Aufbau einfachen Antriebssystem geschaffen werden.

Gemäß einem ersten Lösungsgedanken ist diese Aufgabe erfindungsgemäß dadurch gelöst, daß bei der Vorrichtung nach dem Oberbegriff des Patentanspruchs 1 die Fördereinrichtung eine Gliederkette aus gelenkig miteinander verbundenen Kettengliedern umfaßt, daß die Kettenglieder unterseitig eben ausgebildet sind und mit den Laufwagen der Sortiereinrichtungen jeweils ein über letztere in Förderrichtung vorstehendes Kettenglied unterseitig fest verbunden ist, daß die Stoßstellen zwischen aufeinanderfolgenden Kettengliedern jeweils von einer vorgespannten Blattfeder unterseitig überbrückt sind und daß die Fördereinrichtung einen Reibradantrieb mit einem unterseitig an den Kettengliedern angreifenden Reibrad umfaßt.

Bei dieser ersten Erfindungsgruppe handelt es sich darum, daß die Laufwagen der Sortiereinrichtungen unterseitig mit Kettengliedern ausgerüstet sind und diese Kettenglieder in Längsrichtung der Sortierstrecke durchlaufende, jeweils gelenkig miteinander verbundene Reibleisten bilden, mit denen das Reibrad des Reibradantriebs zusammenwirkt. Dabei sind die Stoßstellen zwischen aufeinanderfolgenden Kettengliedern unterseitig von vorgespannten und daher an den Kettengliedern anliegenden Blattfedern überbrückt, wodurch das Reibrad auch im Bereich der genannten Stoßstellen weitgehend ebene Angriffsflächen vorfindet.

Nach einer Weiterbildung der Erfindung sind die einzelnen Kettenglieder über Kugelgelenke mittels spezieller Verbindungselemente aneinandergekoppelt, welche Verbindungselemente unter Überbrückung der Stoßstellen zwischen aufeinanderfolgenden Kettengliedern diesen oberseitig zugeordnet sind.

Die Blattfedern zur Überbrückung der Stoßstellen zwischen aufeinanderfolgenden Kettengliedern sind zweckmäßigerweise jeweils an einem Kettenglied in der Nähe von dessen zum anderen Kettenglied hinweisenden Stirnende befestigt und liegen unter Überbrückung der Stoßstelle mit Vorspannung flächenhaft an der Unterseite des jeweils anderen Kettengliedes derart an, daß auch im Bereich der Stoßstellen eine durchgehend glatte Reibfläche für den Angriff des Reibrades vorhanden ist.

Eine andere wichtige Weiterbildung der Erfindung sieht vor, daß es sich bei dem Reibradantrieb um einen Proportionalantrieb mit einem Reibrad handelt, dessen Anpressung an die Kettenglieder sich in Abhängigkeit von der auf die Gliederkette zu übertragenden Antriebskraft ändert, wodurch eine Anpassung an die jeweiligen Betriebserfordernisse gewährleistet und ein weitestgehend schlupffreier Antrieb der Gliederkette und damit der Sortiereinrichtungen sichergestellt ist.

Ein derartiger Proportionalantrieb ist vorbekannt und in der DE 42 44 170 C2 beschrieben.

Als ebenfalls zweckmäßig hat es sich erwiesen, den Reibradantrieb so innerhalb der Vorrichtung anzuordnen, daß das Reibrad in einem horizontal verlaufenden Abschnitt der Sortierstrecke unterseitig an den gelenkig miteinander verbundenen Kettengliedern angreift.

Auch können längs der Sortierstrecke beabstandet voneinander wenigstens zwei Reibradantriebe mit jeweils einem reibungsschlüssig mit den Kettengliedern zusammenwirkenden Reibrad angeordnet sein. Diese Maßnahme empfiehlt sich insbesondere bei Sortierstrecken großer Länge und/oder in verschiedenen Ebenen geführten Sortierstrecken.

Dadurch, daß bei der gemäß den vorstehenden Maßnahmen ausgestaltete Vorrichtung die Stoßstellen zwischen aufeinanderfolgenden Kettengliedern jeweils von einer vorgespannten Blattfeder unterseitig überbrückt sind, ist bei einem im Aufbau einfachen Antriebssystem auch ein vergleichsweise geräuscharmer Antrieb ermöglicht. Für bestimmte Anwendungen ist jedoch ein Antrieb mit einer noch geringeren Geräuschentwicklung und eine größere Flexibilität hinsichtlich der Anordnung des Antriebssystems gewünscht.

Dementsprechend ist gemäß einem alternativen Lösungsgedanken oder gemäß einer besonders bevorzugten Ausführungsvariante der Vorrichtung zum Sortieren von Stückgütern, bei der längs einer Sortierstrecke aufeinanderfolgend Sortiereinrichtungen geführt und mittels einer Fördereinrichtung angetrieben sind, und bei der jede Sortiereinrichtung einen Laufwagen mit an Führungsschienen der Sortierstrecke geführten Laufrollen besitzt sowie Mittel für die Aufnahme jeweils eines in einer Aufgabestation aufgebbaren Stückgutes und für dessen gezielten Abwurf in einer Abwurfstation aufweist, vorgesehen, daß die Fördereinrichtung eine Gliederkette aus gelenkig miteinander verbundenen Kettengliedern umfaßt, wobei mit den Laufwagen der Sortiereinrichtungen jeweils ein Kettenglied fest verbunden ist, wobei die Fördereinrichtung einen Reibflächenantrieb mit wenigstens drei, jeweils einen Andrückumfang aufweisende und um Drehachsen drehbare Drehelemente umfaßt, die mit einem starren Träger in Sortierstreckenrichtung beabstandet verbunden sind, derart, daß stets der Andrückumfang von wenigstens zwei der Drehelemente mit der Andrückfläche zumindest eines einzigen Kettengliedes kraftschlüssig zusammenwirkt.

Dadurch daß die Drehelemente mit einem starren Träger verbunden und an diesem längs der Sortierstrecke in Förderrichtung beabstandet angeordnet sind und daß stets wenigstens zwei der Drehelemente mit zumindest einem Kettenglied kraftschlüssig zusammenwirken, wird erreicht, daß der Andrückumfang des jeweils dritten bzw. weiteren Drehelements beim Abrollen bzw. Abwälzen entlang der Kettenglieder zumindest weniger stark in die an den Stoßstellen zweier aufeinanderfolgender Kettenglieder auftretenden Zwischenräume eingreift, so daß bei einem im Aufbau einfachen Antriebssystem ein besonders geräuscharmer Antrieb erreicht wird.

Ferner weist dieses Antriebssystem hinsichtlich der Anordnung und Gestaltung der Kettenglieder sowie hinsichtlich der Anordnung der dem Reibflächenantrieb zugeordneten Teile und Vorrichtungen eine größere Flexibilität auf, so daß die Vorrichtung und das Antriebssystem noch besser auf die jeweiligen Anwenderbedürfnisse angepaßt gestaltet werden kann.

Vorteilhafterweise sind die wenigstens drei Drehelemente in Sortierstreckenrichtung derart beabstandet angeordnet, daß der Andrückumfang jedes dieser Drehelemente mit der Andrückfläche jeweils eines der aufeinanderfolgenden Kettenglieder kraftschlüssig zusammenwirken kann. Dadurch läßt sich die Geräuschentwicklung des Antriebssystems noch weiter reduzieren.

Es ist ferner von Vorteil, wenn die Drehelemente als Reibräder ausgebildet sind, deren Andrückumfang direkt mit der Andrückfläche der Kettenglieder reibschlüssig zusammenwirkt. Alternativ ist es vorteilhaft, wenn zwischen dem Andrückumfang der Drehelemente und der Andrückfläche eines Kettengliedes ein wenigstens zwei der Drehelemente umschlingender, vorzugsweise als Gurthand ausgebildeter Umschlingungstrieb derart angeordnet ist, daß dieser mit dem Andrückumfang der Drehelemente kraftschlüssig zusammenwirkt und mit der Andrückfläche des Kettengliedes reibschlüssig zusammenwirkt. Dadurch läßt sich die Geräuschentwicklung des Antriebssystems noch weiter reduzieren.

Zweckmäßigerweise umschlingt der Umschlingungstrieb wenigstens drei der in Sortierstreckenrichtung beabstandeten Drehelemente.

Eine weitere Reduzierung der Geräuschentwicklung kann dadurch erreicht werden, daß der Umschlingungstrieb mit dem Andrückumfang der vorzugsweise als Reibräder ausgebildeten Drehelemente reibschlüssig zusammenwirkt.

Zweckmäßigerweise sind die Drehelemente über ein Antriebsmittel derart gekoppelt, daß sich ihr Andrückumfang mit im wesentlichen gleicher Umfangsgeschwindigkeit dreht. Durch diese Maßnahmen lassen sich günstige Antriebsverhältnisse schaffen und der Reiflächenantrieb kann über ein einziges Antriebsaggregat, beispielsweise einen Motor angetrieben werden.

Zweckmäßigerweise ist daß das Antriebsmittel mit einem Umschlingungstrieb, insbesondere als Keil- und/oder Zahnriemen ausgebildet, der auf hierzu passend gestalteten, um Drehachsen drehbaren Riemenscheiben angeordnet ist, wobei vorzugsweise jeweils ein Drehelement und wenigstens eine Riemenscheibe um eine gemeinsame starre Drehachse drehbar angeordnet sind.

Ferner ist es von Vorteil, wenn der Andrückumfang der Drehelemente in einem horizontal verlaufenden Abschnitt der Sortierstrecke unterseitig oder seitlich an den gelenkig miteinander verbundenen Kettengliedern angreift. Auf diese Weise lassen sich günstige Antriebsverhältnisse bei vorteilhaften Anordnungsmöglichkeiten für den Reibflächenantrieb schaffen.

Als ebenfalls zweckmäßig hat es sich erwiesen, die Kettenglieder als mit den Laufwagen der Sortiereinrichtungen unterseitig fest verbundene Reibleisten auszubilden, wobei vorzugsweise die Reibleisten mit voneinander wegweisenden parallelen Andrückflächen gestaltet sind, wobei die eine Andrückfläche mit dem Andrückumfang der Drehelemente und die andere Andrückfläche mit einer vorrichtungsfesten Gegendruckrolle kraftschlüssig zusammenwirkt. Dies ermöglicht günstige Anordnungsverhältnisse, eine stabile und präzise Führung sowie einen geräuscharmen Antrieb.

Wenn die Kettenglieder in Sortierstreckenrichtung vorzugsweise beidseitig der Laufwagen der Sortiereinrichtungen vorstehen, können die sich an den Stoßstellen der Kettenglieder ausbildenden Zwischenräume und folglich die Geräuschentwicklung des Antriebssystems minimiert werden. Ferner sind durch diese Maßnahmen auch bei Sortiereinrichtungen mit einer senkrecht zur Förderrichtung relativ großen Breite auch enge Kurven der Sortierstrecke möglich, ohne daß die Sortiereinrichtungen höhenversetzt zueinander angeordnet werden müßten.

Vorteilhafterweise ist der Träger der Drehachsen relativ zu den ebenen Andrückflächen der Kettenglieder beweglich ausgebildet, wodurch besonders günstige Antriebsverhältnisse und eine reduzierte Geräuschentwicklung des Antriebssystems ermöglicht sind.

Dabei ist es besonders vorteilhaft, wenn es sich bei dem Reibflächenantrieb um einen Proportionalantrieb mit wenigstens einem Drehelement handelt, dessen Anpressung an die Kettenglieder sich in Abhängigkeit von einer auf die Gliederkette zu übertragenden Antriebskraft ändert, wodurch eine Anpassung an die jeweiligen Lastverhältnisse und Betriebserfordernisse und ein weitestgehend schlupffreier Antrieb der Gliederkette und folglich der Sortiereinrichtungen ermöglicht ist.

Ferner ist es zweckmäßig, daß längs der Sortierstrecke beabstandet voneinander wenigstens zwei Reibflächenantriebe mit wenigstens drei, einen Andrückumfang aufweisenden und mit den Kettengliedern kraftschlüssig zusammenwirkenden Drehelementen angeordnet ist. Dadurch ist auch bei Sortierstrecken großer Länge und /oder in verschiedenen Ebenen geführten Sortierstrecken ein einfacher und geräuscharmer Antrieb möglich.

Logischerweise müssen zwischen den gelenkig miteinander verbundenen Kettengliedern Stoßstellen bildende Zwischenräume auftreten, die gemäß dem ersten Lösungsgedanken der Erfindung auf der Unterseite der Gliederkette von den genannten Blattfedern überbrückt sind. Um diese Zwischenräume möglichst klein zu halten, gleichwohl aber eine Gelenkigkeit der einzelnen Kettenglieder gegeneinander derart zu ermöglichen, daß die Gliederkette Kurven zu folgen und auch über ansteigende und abfallende Abschnitte der Sortierstrecke geführt werden kann, ist es von Vorteil, die Kettenglieder an ihren Stirnenden mit balligen Abrundungen auszurüsten.

Anstelle balliger Abrundungen an den Stirnenden können die Kettenglieder stirnendig auch mit derart ausgebildeten Schrägabschnitten versehen sein, daß sich jeweils zwischen zwei gelenkig miteinander verbundenen Kettengliedern eine nach oben weisende Aussparung in der Art eines V-förmigen Winkels bildet, der insbesondere bei aufsteigenden und abfallenden Abschnitten der Sortierstrecke eine zwängungsfreie Bewegung der miteinander verbundenen Kettenglieder ermöglicht. Darüber hinaus ist es im Interesse der Kurvengängigkeit der Gliederkette sinnvoll, wenn diese, in einer Draufsicht gesehen, stirnendig abgerundet, etwa mit halbkreisbogenförmigen Enden oder mit pfeilspitzenförmigen Abschrägungen der Enden versehen sind.

Vorstehende Maßnahmen tragen sowohl einzeln als auch in Kombination untereinander dazu bei, eine Vorrichtung der eingangs genannten Art und Zweckbestimmung mit einem im Aufbau einfachen und geräuscharmen Antriebssystem zu schaffen.

Weitere Merkmale, Gesichtspunkte und Vorteile der Erfindung sind dem nachfolgenden, anhand der Figuren abgehandelten Beschreibungsteil entnehmbar.

Anhand der beigefügten Zeichnungen sollen nachstehend eine Ausführungsform der Erfindung sowie einige realisierbare Sortierstreckenverläufe erläutert werden. In schematischen Ansichten zeigen:
- Fig. 1: in einer Draufsicht eine Vorrichtung zum Sortieren von Stückgütern mit einer in sich geschlossenen Sortierstrecke, die in einer Horizontalebene verläuft und je zwei Geradabschnitte und diese an ihren Enden miteinander verbindende halbkreisbogenförmige Abschnitte besitzt in einer Draufsicht,
- Fig. 2: einen der Schnittlinie II-II in Fig. 1 entsprechenden Querschnitt durch die Vorrichtung,
- Fig. 3: in einer Ansicht gemäß Pfeil III in Fig. 2 mittels einer Gliederkette gelenkig aneinander gekoppelte Sortiereinrichtungen sowie einen Reibradantrieb mit einem unterseitig an den Gliedern der Kette angreifenden Reibrad,
- Fig. 4: eine ausschnittsweise Draufsicht auf zwei gelenkig miteinander verbundene Kettenglieder,
- Fig. 5: in einer ausschnittsweisen Seitenansicht zwei gelenkig miteinander verbundene Kettenglieder im Bereich einer ansteigenden Führung der Sortiereinrichtungen,
- Fig. 6: in einer Ansicht wie in Fig. 5 zwei gelenkig miteinander verbundene Kettenglieder im Bereich einer abfallenden Führung der Sortiereinrichtungen,
- Fig. 7: in einer ausschnittsweisen Seitenansicht das Führen aneinandergekoppelter Sortiereinrichtungen in unterschiedlichen Ebenen,
- Fig. 8: in einer Draufsicht auf eine Vorrichtung zum Sortieren von Stückgütern eine Sortierstrecke mit einem von Fig. 1 abweichenden Streckenverlauf,
- Fig. 9: in einer Ansicht gemäß der Schnittlinie IX-IX in Fig. 11 ein weiteres Ausführungsbeispiel mittels einer Gliederkette gelenkig aneinander gekoppelter Sortiereinrichtungen sowie einen Reibflächenantrieb mit drei unterseitig an den Gliedern der Kette angreifenden Reibrädern,
- Fig. 10: in einer der Fig. 9 entsprechenden Ansicht ein weiteres Ausführungsbeispiel eines Reibflächenantriebes mit drei mit einem Umschlingungstrieb versehenen Reibrädern, der unterseitig an den Gliedern der Kette angreift,
- Fig. 11: einen der Fig. 2 entsprechenden Querschnitt durch die Vorrichtung gemäß Fig. 9 und
- Fig. 12: einen der Fig. 11 entsprechenden Querschnitt durch ein weiteres Ausführungsbeispiel einer Vorrichtung zum Sortieren von Stückgütern, bei der der Reibflächenantrieb seitlich an den Kettengliedern angreift.

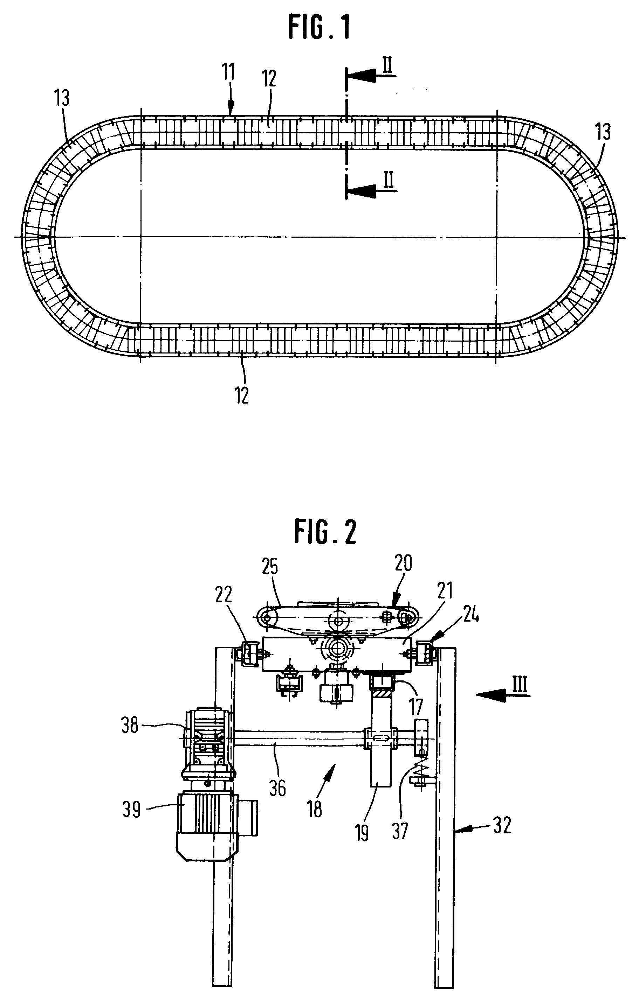

Die in den Fig. 1 bis 3 veranschaulichte Vorrichtung 10 zum Sortieren von Stückgütern besitzt eine in sich geschlossene Sortierstrecke 11, die in einer Horizontalebene verläuft und zwei geradlinige Sortierabschnitte 12 sowie zwei letztere miteinander verbindende bogenförmige Sortierabschnitte 13 aufweist. Längs der Sortierstrecke 11 sind mindestens eine Aufgabestation und aufeinanderfolgend mehrere Abwurfstationen mit seitlichen Abwurfrutschen angeordnet. Die Aufgabestation und die Abwurfstationen mit den genannten Abwurfrutschen sind in der Zeichnung nicht veranschaulicht.

Die Vorrichtung 10 umfaßt ferner eine Fördereinrichtung 15 mit einer Gliederkette 16 aus gelenkig miteinander verbundenen Kettengliedern 17 und einem Reibradantrieb 18 mit einem unterseitig an den Kettengliedern 17 angreifenden Reibrad 19. Mittels der Gliederkette 16 sind längs der Sortierstrecke 11 bewegbar geführte Sortiereinrichtungen 20 miteinander verbunden.

Die Sortiereinrichtungen 20 besitzen jeweils einen Laufwagen 21 mit zwei auf beiden Seiten in Förderrichtung voneinander beabstandeten Laufrollen 22, die in seitlich beabstandet voneinander vorrichtungsfest angeordneten Führungsschienen 24 in im einzelnen in hier nicht interessierender Weise geführt sind. Auf den Laufwagen 21 der Sortiereinrichtungen 20 ist jeweils ein quer zur Sortierstrecke 11 antreibbares Gurtband 25 aufgenommen. Die Gurtbänder 25 der Sortiereinrichtungen 20 sind jeweils über Umlenkrollen mit sich in Förderrichtung erstreckenden Drehachsen geführt. Der Querantrieb der Gurtbänder der Sortiereinrichtungen erfolgt durch in den Abwurfstationen wahlweise zur Zusammenwirkung bringbare Antriebsmittel, deren Beschaffenheit und Funktion indessen hier auch nicht weiter interessiert.

Die aufeinanderfolgend längs der Sortierstrecke 11 bewegbar geführten Sortiereinrichtungen 20 sind mittels der ihrerseits aus gelenkig miteinander verbundenen Kettengliedern 17 bestehenden Gliederkette 16 aneinander gekoppelt. Jeweils ein Kettenglied 17, die eine Länge größer als die Erstreckung der Sortiereinrichtungen 20 in deren Förderrichtung haben, ist unter einem Laufwagen 21 in dessen Förderrichtung weisend fest angeordnet und steht beidendig über die jeweilige Sortiereinrichtung 20 vor. Die Enden aufeinanderfolgender Kettenglieder 17 sind mittels auf deren zu den Gurtbändern 25 der Sortiereinrichtungen 20 hinweisenden Seiten angeordneter Verbindungselemente 26 mit Kugelgelenken 27 derart gelenkig miteinander verbunden, daß die Sortiereinrichtungen 20 geradlinig und bogenförmig ausgebildete Abschnitte 12, 13 der Sortierstrecke 11 durchlaufen können, darüber hinaus aber auch auf erhöhte oder abgesenkte Sortierabschnitte übergeführt werden können. Die Kugelgelenke 27 ermöglichen somit den Ausgleich bei Umlenkungen in der Ebene und auch an ansteigenden oder abfallenden Abschnitten der Sortierstrecke 11.

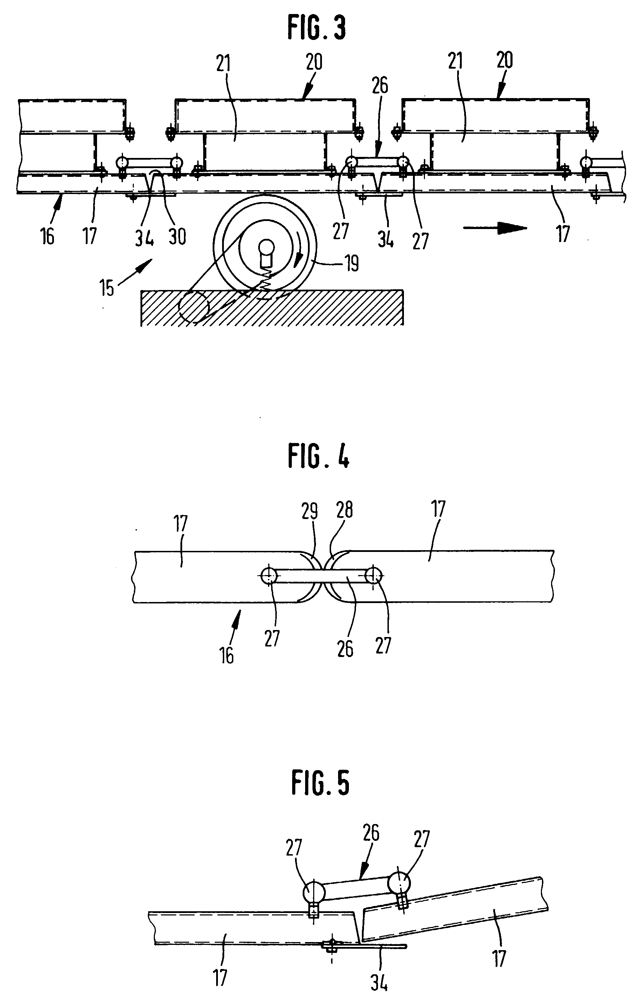

Im Interesse der Kurvengängigkeit der Gliederkette 16 sind die Stirnenden der Kettenglieder, in einer Draufsicht gesehen, mit Abrundungen 28 versehen, wie dies Fig. 4 zeigt. Angesichts dieser Abrundungen 28 vermögen die Kettenglieder 17 unter Ausbildung von Polygonbogenführungen dem Verlauf der Sortierstrecke 11 zwängungsfrei zu folgen.

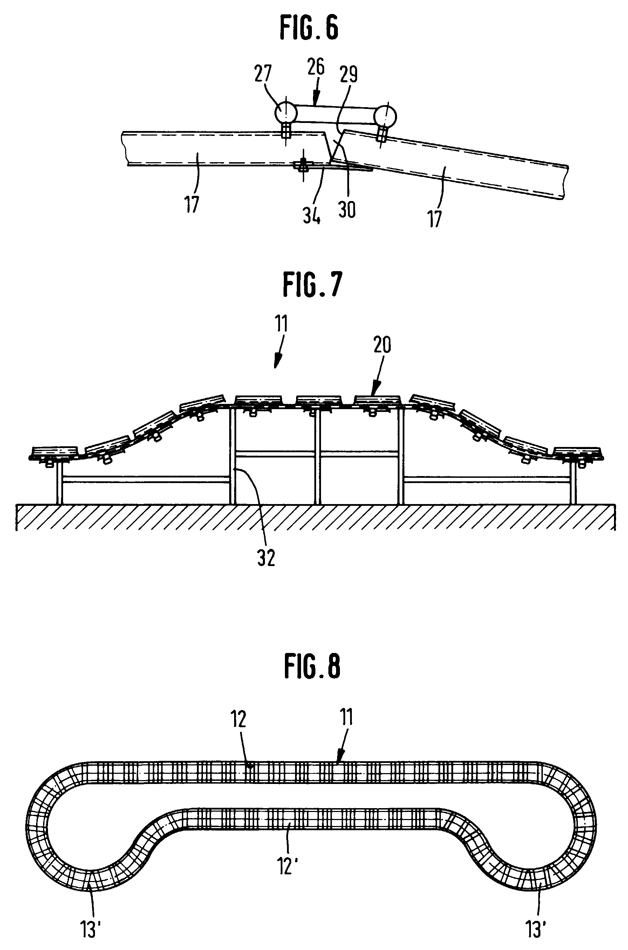

Darüber hinaus weisen die Stirnenden der Kettenglieder 17 nach oben zurückspringende Schrägabschnitte 29 auf, wodurch im Bereich aneinandergrenzender Kettenglieder 17 nach oben offene V-förmige Zwickel 30 gebildet sind, was insbesondere in Fig. 3 ersichtlich ist. Angesichts dieser Zwickel 30 können die miteinander gelenkig verbundenen Kettenglieder 17 beim Überführen der Sortiereinrichtungen 20 auf einen erhöhten oder abgesenkten Abschnitt einer Sortierstrecke 11 in ihren Verbindungsbereichen gegeneinander zwängungsfrei abknicken. Dies zeigen die Fig. 5 und 6.

Fig. 7 veranschaulicht in einer schematischen Seitenansicht eine gattungsgemäße Vorrichtung 10, bei der die auf einem nur angedeuteten Standgestell 32 aufgenommene Sortierstrecke 11 abschnittsweise erhöht ist.

Die an den Laufwagen 21 der Sortiereinrichtung 20 fest angeordneten Kettenglieder 16 sind mit ebenen Unterseiten ausgerüstet, mit denen in nachstehend noch zu beschreibender Weise das Reibrad 19 des Reibradantriebes 18 zusammenwirkt. Logischerweise treten zwischen den gelenkig miteinander verbundenen Kettengliedern 17 kleine Zwischenräume auf, die zwar durch eine geschickte Konstruktion sehr klein gehalten werden können, aber bei ansteigendem oder absteigendem Verlauf der Sortierstrecke 11 und entsprechender Führung der Sortiereinrichtungen 20 sowie in Kurven der Sortierstrecke 11 sind Zwischenräume unvermeidbar, die vom Reibrad 19 nur schlecht zu überbrücken sind. Deshalb sind vorliegend die Stoßstellen zwischen aneinandergrenzenden Kettengliedern 17 unterseitig von jeweils einer in der Nähe einer Stoßstelle an einem Kettenglied 17 befestigten Blattfeder 34 überbrückt, die unter Vorspannung der Unterseite des jeweils anderen Kettengliedes 17 anliegt. Dadurch sind auch im Bereich der Stoßstellen ebene Angriffsflächen für das Reibrad 19 verwirklicht mit der Folge, daß im Betrieb der Vorrichtung 10 keine durch derartige Zwischenräume verursachten Stöße auftreten. Dadurch sind gleichermaßen die Geräuschentfaltung und der Reibradverschleiß minimiert.

Bei dem Reibradantrieb 18 handelt es sich um einen aus der DE 42 44 170 C2 vorbekannten Proportionalantrieb, bei dem das auf einer Antriebswelle 36 drehtest aufgenommene Reibrad 19 mittels einer Druckfeder 37 unterseitig an die Kettenglieder 17 angepreßt wird und der so ausgelegt ist, daß in Abhängigkeit von der auf die Gliederkette 16 zu übertragenden Antriebskraft sich die Anpreßkraft des Reibrades 19 an die Kettenglieder 17 ändert. Derartige Proportionalantriebe vermitteln einen weitgehend schlupffreien Antrieb. Die das Reibrad 19 drehfest aufnehmende Antriebswelle 36 steht über ein Winkelgetriebe 38 mit einem elektrischen Antriebsmotor 39 in Antriebsverbindung. Das Winkelgetriebe 38 mit dem an dieses angeflanschten Antriebsmotors 39 ist in hier nicht weiter interessierender Weise an dem die Führungsschienen 24 zum Führen der Sortiereinrichtungen 20 aufnehmenden Standgestell 32 gelagert.

Die in Fig. 8 veranschaulichte Sortierstrecke 11 besitzt ebenfalls zwei beabstandet voneinander verlaufende geradlinige Sortierabschnitte 12, 12' und zwei diese miteinander verbindende bogenförmige Sortierabschnitte 13', die allerdings annähernd als Dreiviertelkreis ausgebildet sind.

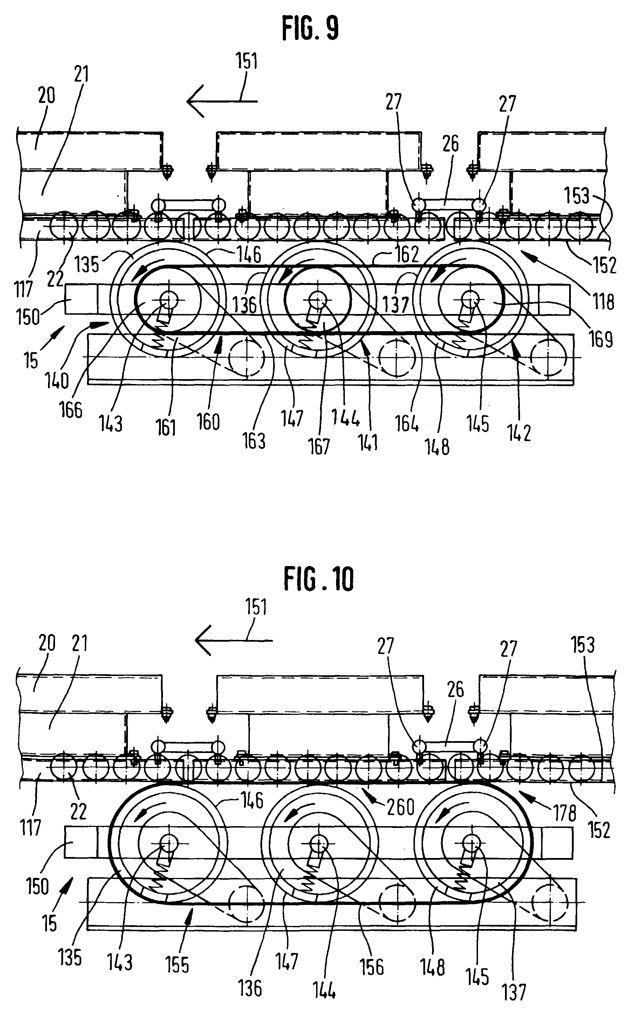

Der in Fig. 9 gezeigte Reibflächenantrieb 118 ist mit den drei Drehelementen 140, 141, 142 gestaltet, die als Reibräder 135, 136, 137 ausgebildet sind. Diese sind um die Drehachsen 143, 144, 145 drehbar in Förderrichtung (Pfeil 151) beabstandet an dem starren, relativ zu den Kettengliedern 117 beweglichen Träger 150 befestigt. Bei dem Reibflächenantrieb 118 handelt es sich genauso wie bei dem Reibradantrieb 18 um einen aus der DB 42 44 170 C2 vorbekannten Proportionalantrieb, bei dem die auf den Drehachsen 143, 144, 145 drehfest aufgenommenen Reibräder 135, 136, 137 mittels einer Druckfeder unterseitig an die Kettenglieder 117 angepreßt werden und der so ausgelegt ist, daß in Abhängigkeit von der auf die Gliederkette 16 zu übertragenden Antriebskraft, sich die Anpreßkraft der Reibräder 135, 136, 137 an die Kettenglieder 117 ändert. Die das Reibrad 136 drehfest aufnehmende, als Antriebsachse dienende Drehachse 144 steht über ein Winkelgetriebe 138 mit einem elektrischen Antriebsmotor 139 in Antriebswirkverbindung.

Die Reibräder 135, 136, 137 weisen stirnseitig den Andrückumfang 146, 147, 148 auf, der mit den Andrückflächen 152 der Kettenglieder 117 in kraft- und reibschlüssiger Wirkverbindung steht. Wie aus Fig. 9 gut ersichtlich, sind die Reibräder 135, 136, 137 über ihre Drehachsen 143, 144, 145 derart in Sortierstreckenrichtung bzw. in Förderrichtung (Pfeil 151) beabstandet mit dem relativ zu den Kettengliedern 117 beweglichen Träger 115 verbunden, daß stets der Andrückumfang 146, 147, 148 von wenigstens zwei der Reibräder 135, 136, 137 mit der Andrückfläche 152 der jeweils benachbarten Kettenglieder 117 kraft- und reibschlüssig zusammenwirkt, wobei in der in Fig. 9 gezeigten Förderposition der Andrückumfang 146, 147, 148 jedes der drei Reibräder 135, 136, 137 mit der Andrückfläche 152 jeweils eines der aufeinanderfolgenden Kettenglieder 117 kraft- und reibschlüssig zusammenwirkt. Durch diese spezielle, auf die Länge der Kettenglieder 117 und die sich zwischen deren Stirnenden ergebenden Zwischenräume angepaßten Anordnung und Gestaltung des Reiblächenantriebs 118 ist ein besonders geräuscharmes Antriebssystem geschaffen.

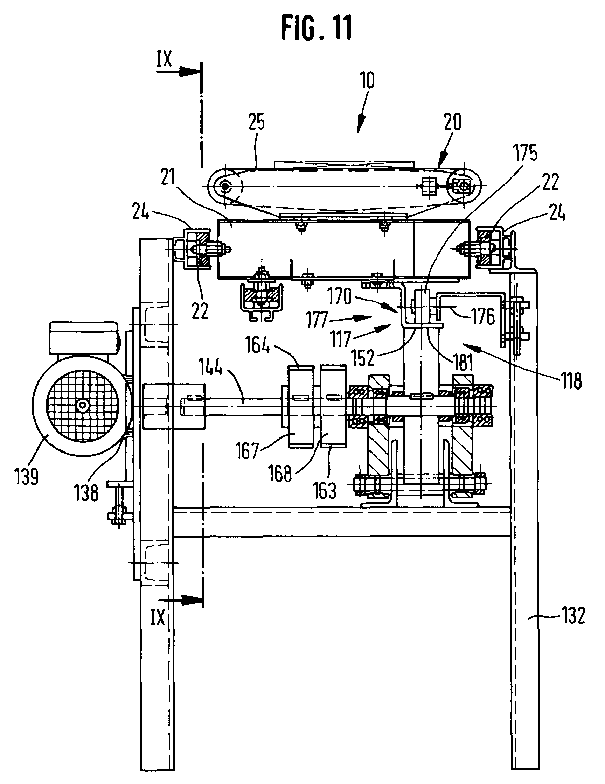

Wie aus den Fig. 9 und 11 ersichtlich, sind auf den starren Drehachsen 143, 144, 145 der Reibräder 135, 136, 137 die Riemenscheiben 166, 167, 168, 169 drehfest angeordnet. Dabei sind die beiden Riemenscheiben 167 und 168 in Achsrichtung parallel versetzt auf der Drehachachse 144 befestigt und die Riemenscheiben 166 und 167 sowie die Riemenscheiben 168 und 169 sind jeweils in Förderrichtung (Pfeil 151) fluchtend zueinander angeordnet. Auf den Riemenscheiben 166 und 167 sowie auf den Riemenscheiben 168 und 169 sind die als Antriebsmittel 160 dienenden Umschlingungstriebe 161 und 162 in Form der Zahnriemen 163 und 164 angeordnet. Auf diese Weise läßt sich der Reibflächenantrieb 116 über eine einzige Antriebsachse (Drehachse 144) und mittels eines einzigen Antriebsaggregates, hier den elektrischen Antriebsmotor 139 antreiben. Ferner wird durch diesen Umschlingungsantrieb 161 erreicht, daß sich jeweils der Andrückumfang 146, 147, 148 der drei Reibräder 135, 136, 137 mit einer im wesentlichen gleichen Umfangsgeschwindigkeit dreht. Dadurch lassen sich günstige Antriebsverhältnisse bei einer geringen Geräuschentwicklung erreichen.

Die Fig. 10 zeigt eine weitere vorteilhafte Ausführungsvariante der Erfindung, wobei dort ebenfalls drei als Drehelemente 140, 141, 142 bezeichnete Reibräder 135, 136, 137 um die Drehachsen 143, 144, 145 drehbar in Förderrichtung (Pfeil 151) versetzt hintereinander angeordnet sind, wobei die Drehachsen 143, 144, 145 an dem starren, relativ zu den Kettengliedern 117 beweglichen Träger 115 gelagert befestigt sind. Im Gegensatz zu dem in Fig. 9 gezeigten Ausführungsbeispiel, ist bei dem in Fig. 10 gezeigten Reibflächenantrieb 178 auf den Reibrädern 135, 136, 137 selbst ein diese gemeinsam umschlingender Umschlingungstrieb 155 in Form des Gurtbandes 156 angeordnet. Folglich drücken in diesem Ausführungsbeispiel die Reibräder 135, 136, 137 über ihren Andrückumfang 146, 147, 148 nicht direkt auf die Andrückflächen 152 der Kettenglieder 117 sondern nur indirekt über das zwischenliegende Gurtband 156. Dadurch kann einerseits eine noch stärkere Geräuschdämpfung erzielt werden und andererseits kann das Gurtband 156 gleichzeitig vorteilhaft als ein eine im wesentlichen gleiche Umfangsgeschwindigkeit vermittelndes Antriebsmittel 260 für die Reibräder 135, 136, 137 und folglich für die die Kettenglieder 117 aufweisenden Sortiereinrichtungen 20 dienen. Es versteht sich, daß anstelle der Reibräder 135, 136, 137, bei denen die Antriebskraft kraft- und reibschlüssig auf den Umschlingungstrieb 155 übertragen wird, auch andere Drehelemente einsetzbar sind. Diese können beispielsweise an ihrem Umfang geeignete Profilierungen aufweisen, in die entsprechend gestaltete Innenprofilierungen eines Umschlingungstriebs formschlüssig eingreifen können, während der äußere Andrückumfang dieses Umschlingungstriebes kraft- bzw. reibschlüssig mit den Andrückflächen 152, 252 der Kettenglieder 117, 217 zusammenwirken kann. Der Antrieb der Reibräder 135, 136, 137 erfolgt auch in diesem Ausführungsbeispiel über einen Elektromotor 139, der über ein Winkelgetriebe 138 mit der als Antriebsachse gestalteten Drehachse 144 des Reibrades 136 verbunden ist.

Die in den Ausführungsbeispielen gemäß Fig. 9 und 10 verwendeten Kettenglieder 117 sind im Querschnitt in Fig. 11 dargestellt. Wie daraus ersichtlich, sind die Kettenglieder 117 als Reibleiste 170 in der Form eines Doppel-L-Profils 177 ausgebildet. Das Doppel-L-Profil 177 ist mit einem oberen Horizontalschenkel, einem sich daran anschließenden Vertikalschenkel und einem sich an diesen anschließenden unteren Horizontalschenkel 181 gestaltet. Der obere Horizontalschenkel ist an der Unterseite des jeweiligen Laufwagens 21 befestigt, während der untere Horizontalschenkel 181 im Bereich seines freien Endes die parallelen Andrückflächen 152 und 153 aufweist. An der unteren Andrückfläche 152 können die Drehelemente 140, 141, 142 mit ihrem Andrückumfang 146, 147, 148 kraft- bzw. reibschlüssig angreifen. Demgegenüber kann die obere Andrückfläche 153 des Horizontalschenkels 181 der Reibleiste 170 in kraft- bzw. reibschlüssigem Eingriff mit der Gegendruckrolle 175 stehen. Diese ist jeweils vorrichtungsfest an dem Standgestell 132 befestigt und kann zur Abstützung der Reibleiste 170 dienen. Hierzu ist die Drehachse 176 der Gegendruckrolle 175 parallel zur Drehachse 144 des Drehelements 141 ausgebildet, wobei die die Drehachse 176 und die Drehachse 144 enthaltende Ebene etwa senkrecht zu den Andrückflächen 152 bzw. 153 und etwa senkrecht zur Förderrichtung (Pfeil 151) ausgebildet ist.

In dem in Fig. 11 gezeigten Ausführungsbeispiel greifen die Drehelemente 140, 141, 142 über ihren Andrückumfang 146, 147, 148 unterseitig an den Andrückflächen 152 der Reibleisten 170 über die mit Kugelgelenken 27 ausgebildeten Verbindungselementen 26 gelenkig miteinander verbundenen Kettgenglieder 117 an. Dadurch läßt sich der Reibflächenantrieb 118 vorteilhaft unterhalb den auf Laufwagen 21 geführten Sortiereinrichtungen 20 zwischen den einen Rahmen bildenden Streben des Standgestells 132 anordnen.

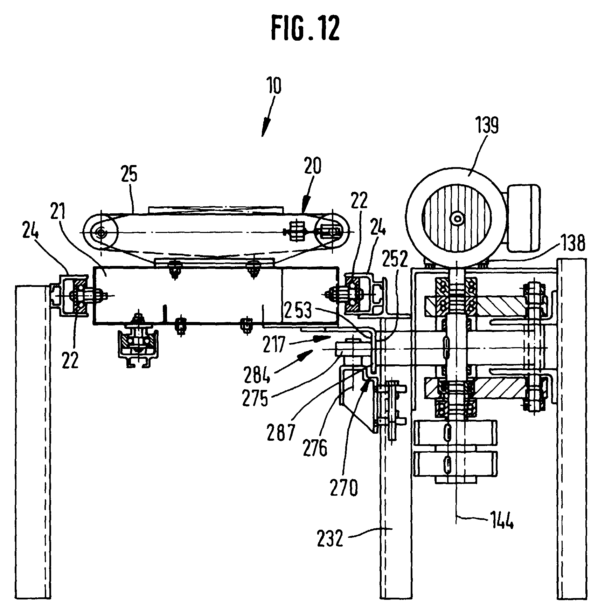

Wie in Fig. 12 gezeigt, kann die Vorrichtung 10 jedoch auch derart ausgestaltet sein, daß der Andrückumfang 146, 147, 148 der Drehelemente 140, 141, 142 seitlich an den gelenkig miteinander verbundenen Kettengliedern 217 angreift. In diesem Fall ist die Reibleiste 270 vorteilhafterweise mit dem L-Profil 284 gestaltet, das einen Horizontalschenkel und den dazu in einem Winkel von 90 Grad abgewinkelten Vertikalschenkel 287 aufweist. Der Horizontalschenkel des L-Profils 284 ist an der Unterseite des Laufwagens 21 der Sortiereinrichtung 20 befestigt. Der Vertikalschenkel 287 des L-Profils 284 der Reibleiste 270 weist die parallelen Andrückflächen 152 und 253 auf, die sich einerseits vertikal und andererseits in Förderrichtung (Pfeil 151) erstrecken. An der außenseitigen vertikalen Andrückfläche 252 können die Drehelemente 140, 141, 142 mit ihrem Andrückumfang 146, 147, 148 kraft- bzw. reibschlüssig angreifen und an der innenseitigen Andrückfläche 253 kann die Gegendruckrolle 275 kraft- bzw. reibschlüssig angreifen. Die Gegendruckrolle ist wiederum fest, jedoch um die vertikale Drehachse 276 drehbar an dem Standgestell 232 befestigt. Bei dem in Fig. 12 gezeigten Ausführungsbeispiel verläuft die vertikale Drehachse 276 der Gegendruckrolle 275 und die Antriebsachse dienende vertikale Drehachse 144 ebenfalls parallel zueinander und in einer Vertikalebene, die normal zur Förderrichtung (Pfeil 151) sowie normal zu den Andrückflächen 252 bzw. 253 des Vertikalschenkels 287 des als Reibleiste 270 ausgebildeten Kettengliedes 217 steht. Die in Fig. 12 gezeigte Anordnung des Reibflächenantriebes 118 ist insbesondere dann zweckmäßig, wenn für dessen Aufnahme der Raum unterhalb der Laufwagen 21 der Sortiereinrichtung 20 nicht zur Verfügung steht. Es versteht sich, daß die als Reibleisten 170, 270 ausgebildeten Kettenglieder 117, 217 nicht notwendigerweise unterhalb der Laufwagen 21 der Sortiereinrichtungen 20 angeordnet sein müssen, sondern auch seitlich an den Laufwagen 21 angeordnet sein können.

### BEZUGSZEICHENLISTE

- 10: Vorrichtung
- 11: Sortierstrecke
- 12: geradliniger Sortierabschnitt
- 12': geradliniger Sortierschnitt
- 13: bogenförmiger Sortierabschnitt
- 13': bogenförmiger Sortierabschnitt
- 15: Fördereinrichtung
- 16: Gliederkette
- 17: Glieder/Kettenglieder
- 18: Reibradantrieb
- 19: Reibrad
- 20: Sortiereinrichtung
- 21: Laufwagen
- 22: Laufrolle
- 24: Führungsschiene
- 25: Gurtband
- 26: Verbindungselement
- 27: Kugelgelenk
- 28: Abrundung
- 29: Schrägabschnitt
- 30: Zwickel
- 32: Standgestell
- 36: Antriebswelle
- 37: Druckfeder
- 38: Winkelgetriebe
- 39: Antriebsmotor
- 117: Kettenglied
- 118: Reibflächenantrieb
- 132: Standgestell
- 135: Reibrad
- 136: Reibrad
- 137: Reibrad
- 138: Winkelgetriebe
- 139: Antriebsmotor
- 140: Drehelement
- 141: Drehelement
- 142: Drehelement
- 143: Drehachse
- 144: Drehachse
- 145: Drehachse
- 146: Andrückumfang
- 147: Andrückumfang
- 148: Andrückumfang
- 150: Träger
- 151: Pfeil
- 152: Andrückfläche von 117
- 153: Andrückfläche von 117
- 155: Umschlingungstrieb
- 156: Gurtband
- 160: Antriebsmittel
- 161: Umschlingungstrieb
- 162: Umschlingungstrieb
- 163: Zahnriemen
- 164: Zahnriemen
- 166: Riemenscheibe
- 167: Riemenscheibe
- 168: Riemenscheibe
- 169: Riemenscheibe
- 170: Reibleiste
- 175: Gegendruckrolle
- 176: Drehachse von 175
- 177: Doppel-L-Profil
- 178: Reibflächenantrieb
- 181: Unterer Horizontal-Schenkel
- 217: Kettenglied
- 232: Standgestell
- 252: Andrückfläche von 217
- 253: Andrückfläche von 217
- 260: Antriebsmittel
- 270: Reibleiste
- 275: Gegendruckrolle
- 276: Drehachse von 275
- 284: L-Profil
- 287: Vertikal-Schenkel

## Patentansprüche

1. Vorrichtung zum Sortieren von Stückgütern, bei der längs einer Sortierstrecke aufeinanderfolgend Sortiereinrichtungen geführt und mittels einer Fördereinrichtung angetrieben sind, und bei der jede Sortiereinrichtung einen Laufwagen mit den Führungsschienen der Sortierstrecke geführten Laufrollen besitzt sowie Mittel für die Aufnahme jeweils eines in einer Aufgabestation aufgebbaren Stückgutes und für dessen gezielten Abwurf in einer Abwurfstation aufweist,
dadurch gekennzeichnet,
daß die Fördereinrichtung (15) eine Gliederkette (16) aus gelenkig miteinander verbundenen Kettengliedern (17) umfaßt, daß die Kettenglieder (17) unterseitig eben ausgebildet sind und mit den Laufwagen (21) der Sortiereinrichtungen (20) jeweils ein über letztere in Förderrichtung vorstehendes Kettenglied (17) unterseitig fest verbunden ist, daß die Stoßstellen zwischen aufeinanderfolgenden Kettengliedern (17) jeweils von einer vorgespannten Blattfeder (34) unterseitig überbrückt sind und daß die Fördereinrichtung (15) einen Reibradantrieb (18) mit einem unterseitig an den Kettengliedern (17) angreifenden Reibrad (19) umfaßt.

2. Vorrichtung nach Anspruch 1, gekennzeichnet durch jeweils über Kugelgelenke (27) an die Kettenglieder (17) angeschlossene Verbindungselemente (16), die unter Überbrückung der Stoßstellen zwischen aufeinanderfolgenden Kettengliedern (17) diesen oberseitig zugeordnet sind.

3. Vorrichtung nach Anspruch 1 oder 2, dadurch gekennzeichnet, daß die Blattfedern (34) zur Überbrückung der Stoßstellen zwischen aufeinanderfolgenden Kettengliedern (17) jeweils an einem Kettenglied (17) in der Nähe von dessen zum anderen Kettenglied (17) hinweisenden Stirnende befestigt sind und unter Überbrückung der jeweiligen Stoßstelle mit Vorspannung flächenhaft an der Unterseite des jeweils anderen Kettengelenks (17) anliegen.

4. Vorrichtung nach einem der Ansprüche 1 bis 3, dadurch gekennzeichnet, daß es sich bei dem Reibradantrieb (18) um einen Proportionalantrieb mit einem Reibrad (19) handelt, dessen Anpressung an die Kettenglieder (17) sich in Abhängigkeit von der auf die Gliederkette (16) zu übertragenden Antriebskraft ändert.

5. Vorrichtung nach einem der Ansprüche 1 bis 4, dadurch gekennzeichnet, daß das Reibrad (19) in einem horizontal verlaufenden Abschnitt der Sortierstrecke (11) unterseitig an den gelenkig miteinander verbundenen Kettengliedern (17) angreift.

6. Vorrichtung nach einem der Ansprüche 1 bis 5, dadurch gekennzeichnet, daß längs der Sortierstrecke (11) beabstandet voneinander wenigstens zwei Reibradantriebe (18) mit jeweils einem reibungsschlüssig mit den Kettengliedern (17) zusammenwirkenden Reibrad (19) angeordnet sind.

7. Vorrichtung zum Sortieren von Stückgütern, bei der längs einer Sortierstrecke aufeinanderfolgend Sortiereinrichtungen geführt und mittels einer Fördereinrichtung angetrieben sind, und bei der jede Sortiereinrichtung einen Laufwagen mit an Führungsschienen der Sortierstrecke geführten Laufrollen besitzt sowie Mittel für die Aufnahme jeweils eines in einer Aufgabestation aufgebbaren Stückgutes und für dessen gezielten Abwurf in einer Abwurfstation aufweist,
dadurch gekennzeichnet,
daß die Fördereinrichtung (15) eine Gliederkette (16) aus gelenkig miteinander verbundenen Kettengliedern (117, 217) umfaßt, wobei mit den Laufwagen (21) der Sortiereinrichtungen (20) jeweils ein Kettenglied (117, 217) fest verbunden ist, wobei die Fördereinrichtung (15) einen Reibflächenantrieb (118) mit wenigstens drei, jeweils einen Andrückumfang (146, 147, 148) aufweisende und um Drehachsen (143, 144, 145) drehbare Drehelemente (140, 141, 142) umfaßt, die mit einem starren Träger (150) in Sortierstreckenrichtung beabstandet verbunden sind, derart, daß stets der Andrückumfang (146, 147, 148) von wenigstens zwei der Drehelemente (140, 141, 142) mit der Andrückfläche (152, 252) zumindest eines Kettengliedes (117, 217) kraftschlüssig zusammenwirkt.

8. Vorrichtung nach Anspruch 7, dadurch gekennzeichnet, daß die wenigstens drei Drehelemente (140, 141, 142) in Sortierstreckenrichtung derart beabstandet angeordnet sind, daß der Andrückumfang (146, 147, 148) jedes dieser Drehelemente (140, 141, 142) mit der Andrückfläche (152, 252) jeweils eines der aufeinanderfolgenden Kettenglieder (117, 217) kraftschlüssig zusammenwirken kann.

9. Vorrichtung nach einem der Ansprüche 7 oder 8, dadurch gekennzeichnet, daß die Drehelemente (140, 141, 142) als Reibräder (135, 136, 137) ausgebildet sind, deren Andrückumfang (146, 147, 148) mit der Andrückfläche (152, 252) der Kettenglieder (117, 217) reibschlüssig zusammenwirkt.

10. Vorrichtung nach einem der Ansprüche 7 oder 8, dadurch gekennzeichnet, daß zwischen dem Andrückumfang (146, 147, 148) der Drehelemente (140, 141, 142) und der Andrückfläche (152) eines Kettengliedes (117) ein wenigstens zwei der Drehelemente (140, 141, 142) umschlingender, vorzugsweise als Gurtband (156) ausgebildeter Umschlingungstrieb (155) derart angeordnet ist, daß dieser mit dem Andrückumfang (146, 147, 148) der Drehelemente (140, 141, 142) kraftschlüssig zusammenwirkt und mit der Andrückfläche (152) des Kettengliedes (117) reibschlüssig zusammenwirkt.

11. Vorrichtung nach Anspruch 10, dadurch gekennzeichnet, daß der Umschlingungstrieb (155) wenigstens drei der in Sortierstreckenrichtung beabstandeten Drehelemente (140, 141, 142) umschlingt.

12. Vorrichtung nach einem der Ansprüche 10 oder 11, dadurch gekennzeichnet, daß der Umschlingungstrieb (155) mit dem Andrückumfang (146, 147, 148) der vorzugsweise als Reibräder (135, 136, 137) ausgebildeten Drehelemente (140, 141, 142) reibschlüssig zusammenwirkt.

13. Vorrichtung nach einem der Ansprüche 7 bis 12, dadurch gekennzeichnet, daß die Drehelemente (140, 141, 142) über ein Antriebsmittel (160, 260) derart gekoppelt sind, daß sich ihr Andrückumfang (146, 147, 148) mit im wesentlichen gleicher Umfangsgeschwindigkeit dreht.

14. Vorrichtung nach Anspruch 13, dadurch gekennzeichnet, daß das Antriebsmittel (160) mit einem Umschlingungstrieb (161, 162), insbesondere als Keil- und/oder Zahnriemen (163, 164) ausgebildet ist, der auf hierzu passend gestalteten, um Drehachsen drehbaren Riemenscheiben (166, 167, 168, 169) angeordnet ist, wobei vorzugsweise jeweils ein Drehelement (140, 141, 142) und wenigstens eine Riemenscheibe (166, 167, 168, 169) um eine gemeinsame starre Drehachse (143, 144, 145) drehbar angeordnet sind.

15. Vorrichtung nach einem der Ansprüche 7 bis 14, dadurch gekennzeichnet, daß der Andrückumfang (146, 147, 148) der Drehelemente (140, 141, 142) in einem horizontal verlaufenden Abschnitt der Sortierstrecke (11) unterseitig oder seitlich an den gelenkig miteinander verbundenen Kettengliedern (117, 217) angreift.

16. Vorrichtung nach einem der Ansprüche 7 bis 15, dadurch gekennzeichnet, daß die Kettenglieder (117, 217) als mit den Laufwagen (21) der Sortiereinrichtungen (20) unterseitig fest verbundene Reibleisten (170, 270) ausgebildet sind.

17. Vorrichtung nach Anspruch 16, dadurch gekennzeichnet, daß die Reibleisten (170, 270) mit voneinander wegweisenden parallelen Andrückflächen (152, 153; 252, 253) gestaltet sind, wobei die eine Andrückfläche (152; 252) mit dem Andrückumfang (146, 147, 148) der Drehelemente (140, 141, 142) und die andere Andrückfläche (153; 253) mit einer vorrichtungsfesten Gegendruckrolle (175; 275) kraftschlüssig zusammenwirkt.

18. Vorrichtung nach einem der Ansprüche 7 bis 17, dadurch gekennzeichnet, daß die Kettenglieder (117, 217) in Sortierstreckenrichtung vorzugsweise beidseitig der Laufwagen (21) der Sortiereinrichtungen (20) vorstehen.

19. Vorrichtung nach einem der Ansprüche 7 bis 18, dadurch gekennzeichnet, daß der Träger (150) der Drehachsen (143, 144, 145) relativ zu den ebenen Andrückflächen (152, 252) der Kettenglieder (117, 217) beweglich ausgebildet ist.

20. Vorrichtung nach einem der Ansprüche 7 bis 19, dadurch gekennzeichnet, daß es sich bei dem Reibflächenantrieb (118) um einen Proportionalantrieb mit wenigstens einem Drehelement (140, 142, 142) handelt, dessen Anpressung an die Kettenglieder (117, 217) sich in Abhängigkeit von einer auf die Gliederkette (16) zu übertragenden Antriebskraft ändert.

21. Vorrichtung nach einem der Ansprüche 7 bis 20, dadurch gekennzeichnet, daß längs der Sortierstrecke (11) beabstandet voneinander wenigstens zwei Reibflächenantriebe (118) mit wenigstens drei, einen Andrückumfang (146, 147, 168) aufweisenden und mit den Kettengliedern (117, 217) kraftschlüssig zusammenwirkenden Drehelementen (140, 141, 142) angeordnet ist.

22. Vorrichtung nach einem der Ansprüche 1 bis 21, dadurch gekennzeichnet, daß die Kettenglieder (17) an ihren Stirnenden mit balligen Abrundungen versehen sind.

23. Vorrichtung nach einem der Ansprüche 1 bis 22, dadurch gekennzeichnet, daß die Kettenglieder (17) stirnendig mit derart ausgebildeten Schrägabschnitten (29) versehen sind, daß sich jeweils zwischen zwei gelenkig miteinander verbundenen Kettengliedern (17) eine nach oben weisende Aussparung (30) in der Art eines V-förmigen Zwickels (30) bildet.

24. Vorrichtung nach einem der Ansprüche 1 bis 21 oder 23, dadurch gekennzeichnet, daß die Kettenglieder (17, 117), in einer Draufsicht gesehen, stirnendig mit etwa halbkreisförmig ausgebildeten Abrundungen (28) versehen sind.
